# EUROPEAN PATENT SPECIFICATION

(11) **EP 2 083 186 B1**
(45) Date of publication and mention of the grant of the patent: **16.01.2013**
(21) Application number: 08001273.5
(22) Date of filing: 24.01.2008
(51) Int. Cl.: F16D 55/00

(54) **Brake shield**
Bremsenabschirmung
Protection de freinage

(43) Date of publication of application: 29.07.2009
(73) Proprietor: GM Global Technology Operations LLC, Detroit, MI 48265-3000 (US)
(72) Inventor: Sand, Stefan, 46375 Hjätum (SE)
(74) Representative: Strauss, Peter

(56) References cited:
- DE-A1- 10 348 001
- FR-A- 2 858 033
- JP-A- 2004 353 797
- US-A- 4 818 030
- US-A- 5 671 827

## Description

### Technical Field of the Invention

The present invention relates to an arrangement of a brake shield to cover a brake disc in a vehicle, wherein said brake shield is arranged to cover one side of said brake disc at least partly, wherein said brake shield comprises a cover portion adapted to cover a hub of said brake disc.

### Technical Background

Brake shields for use in disc brake arrangements are well known in the art and used for shielding the part of a brake disc inner side that is not covered by the brake caliper. To stop the wheel, friction material in the form of brake pads, mounted in the brake caliper, is forced mechanically, hydraulically, pneumatically or electromagnetically against both sides of the brake disc. Friction causes the brake disc and the attached wheel to slow or stop. Such a brake shield is disclosed in US 5,671,827.

Adjacent the brake disc, at the centre part of a disc brake arrangement, a vehicle wheel speed sensor may be arranged. Vehicle wheel speed sensors are well known in the art and are used for measuring the rate of rotation of a vehicle wheel. Information from vehicle wheel speed sensors are critical to many important systems in the vehicle such as the vehicle anti-lock braking systems (ABS), traction control systems (TCS), electronic stability program (ESP), electronically controlled suspension system and a power steering system. Such systems rely on accurate speed signals. Each wheel on a vehicle usually has its own speed sensor, which sends a signal to a control module.

During vehicle operation, a transmitter mounted on the rotating vehicle wheel sends a signal to the wheel speed sensor indicating the rotational speed of the associated vehicle wheel, and the wheel speed sensor transmits a signal to a control module, corresponding to the rotational speed of the vehicle wheel. The speed sensor is commonly an electromagnetic sensor that reacts to a corresponding electrical signal. Wheel speed sensors for automobiles typically utilize an encoder ring mounted at a wheel and a receiver that detects the passage of a marker element as the wheel turns. The output signal could be either a measure of the speed or changes in the speed.

The position of the wheel speed sensor in a vehicle exposes it to dirt, water, ice and other foreign objects that could cause damage to the sensor and lead to measuring faults. In particular, iron particles that detaches from the brake disc can cause measuring faults in an electromagnetic sensor. Hence, it is important to protect the vehicle wheel speed sensor from these kinds of contaminations.

The conventional way of protecting a vehicle wheel speed sensor is to have a sensor cover placed over the sensor. This also protects the sensor from particles detached from the wheel and tyre when braking. Due to the assembling of the surrounding parts, such a sensor cover is mounted over work-pieces as the adapter plate and the carrier for the disc brake and hub components. However, it is becoming increasingly common, due to flexibility demands, to assemble the vehicle wheel speed sensor at a later stage instead of having it factory-assembled, which implies subsequent assembling of the sensor cover.

In addition, there is always a need to improve the manufacturing and assembling process within the vehicle industry.

### Summary of the Invention

In view of the above, an objective of the present invention is to solve or at least reduce the problems discussed above. In particular, an objective is to provide an improved brake shield with additional shielding features according to claim 1. Preferred embodiments of the present invention are presented in the dependent claims.

According to the invention a brake shield to cover a brake disc in a vehicle is arranged to cover one side of the brake disc at least partly, wherein the brake shield comprises a cover portion adapted to cover a hub of the brake disc. An advantage of the invention concerns the assembling of the brake shield. Since the brake shield comprises a cover portion, assembling of a separate work-piece for covering the hub of the brake shield becomes unnecessary. In addition, having a brake shield that comprises such a cover portion allows benefiting from synergy effects, since the brake shield may be suitable for different vehicles and, again, no separate work-piece, specific for each vehicle model, for covering the hub of the brake shield is necessary. This also saves tool costs.

According to the invention the cover portion is a closed central flat or a closed central cup shaped cover portion which also covers at least partly a wheel speed sensor. The cover portion of the brake shield covers a wheel speed sensor and hence no separate wheel speed sensor cover is needed. This saves process steps in both assembling and manufacturing of a separate speed sensor cover.

Advantageously, the brake shield and the cover portion are made in one part. Having the brake shield in one part assures a tight sealing between the cover portion and the rest of the brake shield without the need of any sealing joint or packing. In addition, process steps are saved in manufacturing since no separate work-piece for covering the hub of the brake disc is needed.

Alternatively, the brake shield and the cover portion are made in separate parts which may be beneficial for instance if different materials are used for the different parts of the brake shield.

Suitably, the cover portion protrudes from the main part of the brake shield. Such a design allows for fitting a wheel speed sensor inside the protruding cover portion.

Preferably, the brake shield comprises at least one opening suitable for inserting a wheel speed sensor. The opening allows for fastening the wheel speed sensor outside of the brake shield and having the wheel speed sensor inserted through the opening. Such an opening also facilitates installation of the wheel speed sensor at a later stage if the wheel speed sensor is not factory-assembled.

Alternatively, the cover portion is adapted to be a retainer for a wheel speed sensor. This design could be advantageously since the cover portion of the brake shield holds the wheel speed sensor in position and hence no additional fastening means is necessary.

Yet another way of holding the wheel speed sensor in place and save additional fastening means could be to have some other part of the brake shield adapted to be a retainer for a wheel speed sensor.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

Advantages of the present invention will appear from the following detailed disclosure, from the attached dependent claims as well as from the drawings.

### Brief Description of the Drawings

A preferred embodiment of the present invention will in the following be described in more detail with reference to the accompanying exemplary drawing, in which:

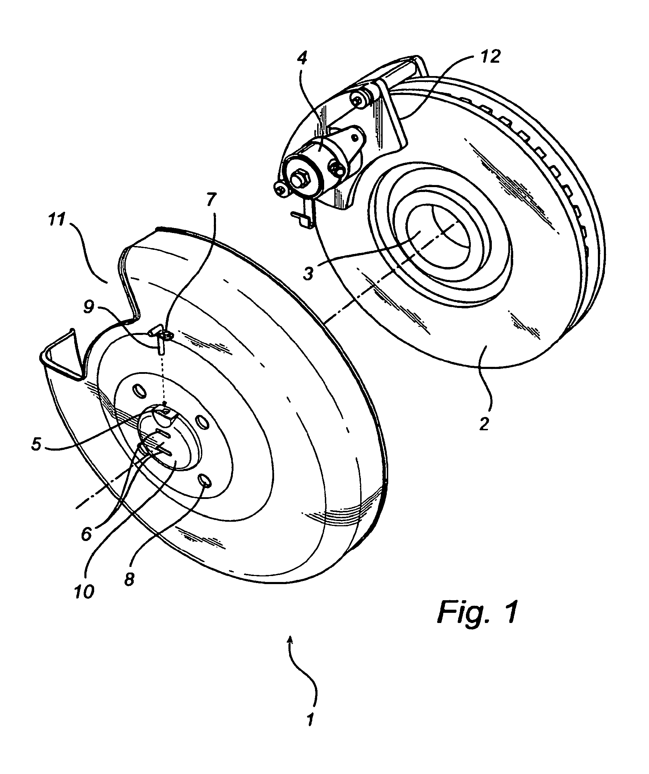

figure 1 is a perspective view showing a brake shield with a brake disc protracted.

### Detailed Description of Preferred Embodiments

Advantages of the present invention, will be better understood through the following illustrative and nonlimiting detailed description of prefered embodiments of the present invention, with reference to the appended drawing, where the same reference numerals will be used for similar elements.

In figure 1, a brake shield 1 according to one embodiment of the present invention is shown. The brake shield 1 is arranged to cover one side of a brake disc 2 at least partly. The brake shield 1 comprises a cover portion 10 adapted to cover a hub 3 of the brake disc 2. To visualize the arrangement clearly, the brake disc 2 with the hub 3 and the brake caliper 4 with brake pads 12 are shown protracted from the brake shield 1. When arranged to a vehicle, the brake shield is arragend adjacent the brake disc at the inner side of the brake disc, as seen from the vehicle. The brake shield 1 has a recess 11 to fit the brake caliper 4.

The brake shield 1 in figure 1 has a cup-shaped cover portion 10 that covers the hub 3 of the brake disk 2. Moreover, the brake shield 1 covers a wheel speed sensor 9 which is inserted through an opening 5 in the brake shield 1 and suspended in a fixing member 7. The fixing member 7 is, in this particular embodiment, arranged on an adapter plate (not shown) which also holds the brake caliper 4. However, other arrangements are possible. For instance, the brake shield itself could be adapted to be the retainer for the wheel speed sensor so that no additional fixing member is needed. Even though figure 1 shown a cup-shaped cover portion, a flat cover portion would also be possible, depending on the design of the wheel speed sensor or other surrounding parts. Further, the brake shield embodiment shown in figure 1 has bore holes 8 for mounting of the brake shield and is adapted for a non-driven wheel of a vehicle since it has no driving axle.

Additionally, the present invention provides a beneficial solution that facilitate assembling of wheel speed sensor equipments since the brake shield can have the functionallity of a wheel speed sensor cover. The vehicle wheel speed sensor can be either factory-assembled or equipped at a later stage, the latter being increasingly common due to flexiblity demands. If the wheel speed sensor is equipped at a later stage the present invention facilitates the assembling since the brake shield can be made in one part and pre-assembled, and the wheel speed sensor 3 can be inserted into the opening 5 at the cover portion 10 of the brake shield 1.

As can be seen in figure 1, the cover portion may have ventilation apertures 6. The ventilation apertures 6 allows the wheel speed sensor accomodation, which might be rather hot due to heat produced from the brakes, to be ventilated by circulation of surrounding air.

In a preferred embodiment of the present invention, the brake shield is a thinwalled shell made of for instance a carbon steel material that can be varnished to better withstand corrosion.

Although the present invention has been described in connection with particular embodiments thereof, it is to be understood that various modifications, alterations and adaptations may be made by those skilled in the art without departing from the scope of the invention. Examples of such modifications are different kinds of materials and shapes of and, additional openings or recesses in the brake shield to fit other components.

### List of reference numbers

- 1: brake shield
- 2: brake disc
- 3: hub
- 4: brake caliper
- 5: opening
- 6: ventilation apertures
- 7: fixing member
- 8: bore holes
- 9: wheel speed sensor
- 10: cover portion
- 11: recess
- 12: brake pads

## Claims

1. Arrangement of a brake shield (1) to cover a brake disc (2) in a vehicle, wherein said brake shield (1) is arranged to cover one side of said brake disc (2) at least partly, wherein
said brake shield (1) comprises a cover portion (10) adapted to cover a hub (3) of said brake disc (2), **characterised in that**
said cover portion (10) is a closed central flat or a closed central cup-shaped cover portion which covers at least partly a wheel speed sensor (9).

2. Arrangement of a brake shield according to claim 1, wherein said brake shield (1) and said cover portion (10) are made in one part.

3. Arrangement of a brake shield according to claim 1, wherein said brake shield (1) and said cover portion (10) are made in separate parts.

4. Arrangement of a brake shield according to any one of the preceding claims, wherein said cover portion (10) protrudes from the main part of said brake shield.

5. Arrangement of a brake shield according to any one of the preceding claims, wherein said brake shield comprises at least one opening (7) suitable for inserting a wheel speed sensor.

6. Arrangement of a brake shield according to any one of the preceding claims, wherein said cover portion (10) is adapted to be a retainer for a wheel speed sensor (9).

7. Arrangement of a brake shield according to any one of the preceding claims, wherein said brake shield is adapted to be a retainer for a wheel speed sensor (9).

## Patentansprüche

1. Anordnung einer Bremsenabschirmung (1) zur Abdeckung einer Bremsscheibe (2) in einem Fahrzeug, wobei die Bremsenabschirmung (1) so angeordnet ist, dass sie eine Seite der Bremsscheibe (2) zumindest teilweise abdeckt, wobei
die Bremsenabschirmung (1) einen Abdeckabschnitt (10) umfasst, der dazu ausgeführt ist, eine Nabe (3) der Bremsscheibe (2) abzudecken, **dadurch gekennzeichnet, dass**
der Abdeckabschnitt (10) ein mittiger, geschlossener, flacher oder ein mittiger, geschlossener, schalenförmiger Abschnitt ist, der zumindest teilweise einen Raddrehzahlsensor (9) abdeckt.

2. Anordnung einer Bremsenabschirmung gemäß Anspruch 1, wobei die Bremsenabschirmung (1) und der Abdeckabschnitt (10) in einem Teil gefertigt sind.

3. Anordnung einer Bremsenabschirmung gemäß Anspruch 1, wobei die Bremsenabschirmung (1) und der Abdeckabschnitt (10) in getrennten Teilen gefertigt sind.

4. Anordnung einer Bremsenabschirmung gemäß einem der vorangehenden Ansprüche, wobei der Abdeckabschnitt (10) vom Hauptteil der Bremsenabschirmung vorragt.

5. Anordnung einer Bremsenabschirmung gemäß einem der vorangehenden Ansprüche, wobei die Bremsenabschirmung mindestens eine Öffnung (7) umfasst, die zum Einführen eines Raddrehzahlsensors geeignet ist.

6. Anordnung einer Bremsenabschirmung gemäß einem der vorangehenden Ansprüche, wobei der Abdeckabschnitt (10) dazu ausgeführt ist, ein Rückhalteelement für einen Raddrehzahlsensor (9) zu bilden.

7. Anordnung einer Bremsenabschirmung gemäß einem der vorangehenden Ansprüche, wobei die Bremsenabschirmung dazu ausgeführt ist, ein Rückhalteelement für einen Raddrehzahlsensor (9) zu bilden.

## Revendications

1. Arrangement de protection de freinage (1) pour couvrir un disque de freinage (2) dans un véhicule, où ladite protection de freinage (1) est disposée pour couvrir un côté dudit disque de freinage (2) au moins partiellement, où :
ladite protection de freinage (1) comprend une portion de couverture (10) adaptée pour couvrir un moyeu (3) dudit disque de freinage (2), **caractérisée en ce que**
ladite portion de couverture (10) est une portion de couverture en forme de coupe centrale fermée ou plate centrale fermée qui couvre au moins partiellement un capteur de vitesse de roue (9).

2. Arrangement de protection de freinage selon la revendication 1, où ladite protection de freinage (1) et ladite portion de couverture (10) sont fabriquées en une partie.

3. Arrangement de protection de freinage selon la revendication 1, où ladite protection de freinage (1) et ladite portion de couverture (10) sont fabriquées dans des parties séparées.

4. Arrangement de protection de freinage selon n'importe laquelle des revendications précédentes, où ladite portion de couverture (10) fait saillie depuis la partie principale de ladite protection de freinage.

5. Arrangement de protection de freinage selon n'importe laquelle des revendications précédentes, où ladite protection de freinage comprend au moins une ouverture (7) appropriée pour l'insertion d'un capteur de vitesse de roue.

6. Arrangement de protection de freinage selon n'importe laquelle des revendications précédentes, où ladite portion de couverture (10) est adaptée pour servir de dispositif de retenue d'un capteur de vitesse de roue (9).

7. Arrangement de protection de freinage selon n'importe laquelle des revendications précédentes, où ladite protection de freinage est adaptée pour servir de dispositif de retenue pour un capteur de vitesse de roue (9).
